# FASCICULE DE BREVET EUROPEEN

(11) **EP 3 656 665 B1**
(45) Date de publication et mention de la délivrance du brevet: **02.06.2021**
(21) Numéro de dépôt: 19210250.7
(22) Date de dépôt: 20.11.2019
(51) Int. Cl.: B64C 25/30, B64C 25/22, B64C 25/26

(54) **CIRCUIT HYDRAULIQUE DE MANOEUVRE DE TRAIN D'ATTERRISSAGE D'AERONEF**
HYDRAULIKKREISLAUF ZUM BETÄTIGEN EINES LUFTFAHRZEUG-FAHRWERKS
HYDRAULIC CIRCUIT FOR MANOEUVRING AN AIRCRAFT LANDING GEAR

(30) Priorité: 23.11.2018 FR 1871798
(43) Date de publication de la demande: 27.05.2020
(73) Titulaire: Safran Landing Systems, 78140 Vélizy-Villacoublay (FR)
(72) Inventeur: FRANK, David, 77550 MOISSY-CRAMAYEL (FR); BELLEVAL, Jean-Luc, 77550 MOISSY-CRAMAYEL (FR)
(74) Mandataire: Lavialle, Bruno François Stéphane

(56) Documents cités:
- EP-A1- 1 914 164
- EP-A1- 2 070 818
- GB-A- 2 469 484

## Description

L'invention concerne un circuit hydraulique de manœuvre de train d'atterrissage d'aéronef.

### ARRIERE PLAN DE L'INVENTION

On connaît des aéronefs munis dont le train d'atterrissage rétractable est déplaçable entre une position rétractée et une position déployée au moyen de divers actionneurs de manœuvre. Le train d'atterrissage est stabilisé dans la position rétractée au moyen de boîtiers d'accrochage à actionnement hydraulique. Il en est de même pour les trappes qui ferment les soutes dans lesquelles le train d'atterrissage est rétracté (voir par exemple le document EP1914164 A1).

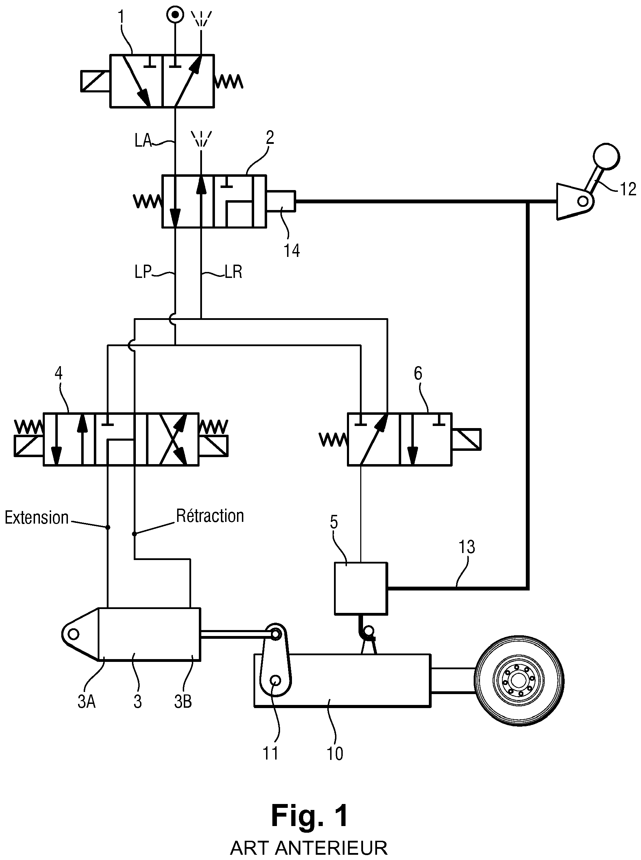

En référence à la figure 1 illustrant un schéma simplifié d'un circuit hydraulique d'actionnement d'un train d'atterrissage d'aéronef selon l'art antérieur, le circuit hydraulique comporte tout d'abord une vanne générale 1 comportant une position d'alimentation dans lequel une ligne d'alimentation LA du circuit est mis à la pression d'alimentation, et une position de retour dans laquelle la ligne d'alimentation LA est mise au retour. La position de retour est ici une position de repos stable, et la position d'alimentation est sélectionnée au moyen d'une commande électrique.

Le circuit comporte deux lignes principales, dont une ligne de pression LP destinée à amener la pression d'alimentation aux distributeurs alimentant les composants hydrauliques du circuit, et une ligne de retour LR connectée au retour de l'aéronef.

Le circuit comporte une vanne de dépressurisation 2 placée ici en aval de la vanne générale 1 et qui, dans une position passante, met la ligne de pression LP en communication avec la ligne d'alimentation LA et la ligne de retour LR au retour, et, dans une position de dépressurisation, met la ligne de pression LP et la ligne de retour LR au retour. Ici la position passante est une position de repos stable.

En aval de la vanne de dépressurisation 2, les lignes de pression LP et de retour LR aboutissent ici à un premier distributeur 4 à trois positions relié à un vérin de manœuvre 3 adapté à faire pivoter autour d'un axe 11 un atterrisseur 10, entre une position rétractée représentée ici et une position déployée. Pour ce faire, le distributeur 4 met sélectivement en communication une ligne d'extension aboutissant ici à une chambre pleine 3A du vérin de manœuvre 3 et une ligne de rétraction aboutissant à une chambre annulaire 3B du vérin de manœuvre 3 avec les lignes de pression LP et de retour LR.

Les lignes de pression LP et de retour LR aboutissent également à un deuxième distributeur 6 à deux positions relié à un actionneur simple effet de libération d'un boîtier d'accrochage 5 (l'actionneur est ici intégré dans le boîtier d'accrochage). Le crochet du boîtier d'accrochage 5 est adapté à se refermer automatiquement sur un doigt de l'atterrisseur 10 quand celui-ci arrive en position rétractée pour le maintenir dans cette position. Il convient donc de provoquer la libération du crochet pour permettre le mouvement de l'atterrisseur 10 vers la position déployée.

Bien entendu, si la soute dans lequel l'atterrisseur se rétracte est équipée d'une ou plusieurs trappes, le circuit hydraulique comprendra également un distributeur pour alimenter un vérin de manœuvre des trappes, et un distributeur pour libérer un crochet maintenant les trappes en position fermée. Les lignes de pression LP et de retour LR aboutissent alors auxdits distributeurs comme elles aboutissent aux distributeurs 4 et 6. Tous ces équipements sont bien entendus répliqués pour chacun des atterrisseurs du train d'atterrissage, bien qu'ils ne soient pas représentés ici.

En cas de défaillance hydraulique, notamment de perte de pression, il faut pouvoir assurer la descente des atterrisseurs vers la position déployée. A cet égard, il convient de libérer les crochets des boîtiers d'accrochage pour libérer les trappes et les atterrisseurs, et de faire en sorte qu'aucun volume de fluide ne soit bloqué dans les chambres des actionneurs concernés, empêchant le mouvement des atterrisseurs et des trappes. En particulier, il convient à tout le moins de mettre la chambre de rétraction du ou des vérins de manœuvre (ici la chambre 3B) au retour. A cet effet, il est connu d'utiliser une commande mécanique de secours sous la forme ici d'un levier 12 actionné par le pilote de l'aéronef qui d'une part, force la libération des crochets des boîtiers d'accrochage 5 au moyen d'une liaison par câble 13, et d'autre part force la vanne de dépressurisation 2 à se mettre dans la position de dépressurisation, ce qui permet à tout fluide contenu dans le vérin de manœuvre 3 de pouvoir s'écouler si besoin vers la bâche de l'aéronef, et notamment le fluide contenu dans la chambre de rétraction 3B, sans opposer de résistance notable, lors de la descente de l'atterrisseur vers la position déployée, et ce quelle que soit la position du distributeur 4.

Il a été également proposé de remplacer cette commande mécanique de secours par une commande de secours motorisée, en équipant les boîtiers d'accrochage de moteurs susceptibles de libérer les crochets, et en équipant la vanne de dépressurisation d'un moteur susceptible de la déplacer à l'encontre du ressort de rappel vers la position de dépressurisation.

Cependant, ces deux options restent lourdes et nécessitent une maintenance particulière. Par exemple, les câbles des commandes à câbles nécessitent une vérification régulière de leur tension. En outre, les commandes de secours doivent être régulièrement testées pour vérifier leur bon fonctionnement. A chaque test, les équipes de maintenance doivent alors réinitialiser le circuit en remettant les crochets et la vanne de dépressurisation dans leur état de fonctionnement nominal.

### OBJET DE L'INVENTION

L'invention vise à proposer un circuit hydraulique simplifié permettant la sortie du ou des atterrisseurs en cas de perte de pression.

### RESUME DE L'INVENTION

En vue de la réalisation de ce but, on propose un circuit hydraulique de manœuvre de train d'atterrissage d'aéronef comportant :
- une vanne générale pour admettre une pression d'alimentation dans le circuit;
- des distributeurs pour alimenter des actionneurs de manœuvre d'atterrisseurs et/ou de trappes du train d'atterrissage ou des actionneurs de libération de crochets maintenant les atterrisseurs et/ou les trappes en position rétractée ;
- une vanne de dépressurisation pour, dans une position passante, permettre la distribution sélective de pression d'alimentation vers une chambre d'extension ou une chambre de rétraction de chaque vérin de manœuvre par les distributeurs, et, dans une position de dépressurisation, forcer la mise au retour d'une chambre de rétraction de chaque vérin de manœuvre ;

Selon l'invention, la vanne de dépressurisation est rappelée de façon stable vers la position de dépressurisation, et est déplacée dans la position passante uniquement en réponse à la présence de pression d'alimentation en aval de la vanne générale.

Ainsi, la vanne de dépressurisation est par défaut dans l'état de dépressurisation. Elle ne peut être déplacée en position passante que si la vanne générale a admis de la pression d'alimentation dans le circuit. Il faut donc que la vanne générale soit en position d'alimentation et que de la pression d'alimentation soit présente en amont de la vanne générale pour que la vanne de dépressurisation soit mise en position passante. Si la vanne générale est défaillante, ou que les pompes de l'aéronef ne sont plus entraînées, alors la vanne de dépressurisation se met automatiquement en position de dépressurisation, sans intervention du pilote, ce qui simplifie considérablement le circuit hydraulique, en supprimant toute commande mécanique ou motorisée de la vanne de dépressurisation. En outre, la vanne de dépressurisation est actionnée à chaque manœuvre des atterrisseurs, de sorte que la surveillance de son fonctionnement est facilement assurée.

### BREVE DESCRIPTION DES DESSINS

L'invention sera mieux comprise à la lumière de la description qui suit des figures des dessins annexés parmi lesquelles, outre
[Fig. 1] la figure 1 déjà détaillée présentant l'art antérieur :
[Fig. 2] la figure 2 est une vue schématique d'un circuit hydraulique de manœuvre de train d'atterrissage d'aéronef selon un premier mode particulier de réalisation de l'invention ;
[Fig. 3] la figure 3 est une vue schématique d'un circuit hydraulique de manœuvre de train d'atterrissage d'aéronef selon un deuxième mode particulier de réalisation de l'invention.

### DESCRIPTION DETAILLEE DE L'INVENTION

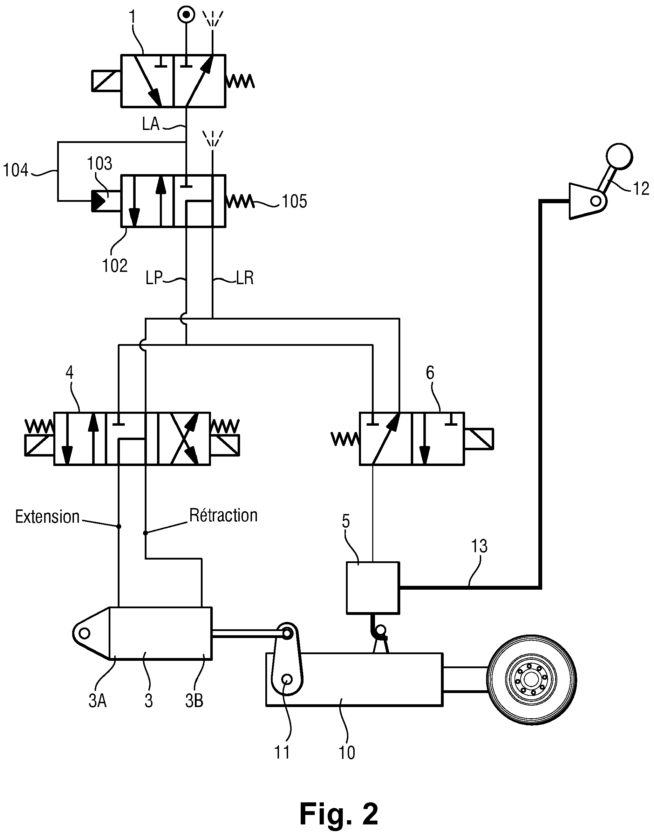

Selon un premier mode particulier de réalisation de l'invention détaillé en référence à la figure 2, le circuit illustré ici est très similaire à celui de la figure 1, et les éléments communs portent des références communes. Le lecteur se reportera à leur description dans la partie introductive des présentes. La différence essentielle avec le circuit de l'art antérieur réside dans la vanne de dépressurisation 102, dont la position stable imposée par le ressort de rappel 105 est maintenant la position de dépressurisation. La position passante est ici commandée au moyen d'une commande hydraulique 103 qui n'est capable de surmonter l'effort du ressort de rappel 105 que si de la pression d'alimentation a été admise dans la ligne d'alimentation LA, c'est-à-dire si la vanne générale 1 a été commandée en position d'alimentation ET si de la pression d'alimentation a été fournie au circuit par les pompes de l'aéronef ou un accumulateur. A cet effet, une dérivation 104 part d'une branche de la ligne d'alimentation LA pour alimenter la commande hydraulique 103. On remarquera que la vanne de dépressurisation 102 n'est plus commandée mécaniquement par le levier 12. Le fonctionnement de la vanne de dépressurisation 102 est entièrement automatique, le circuit hydraulique étant par défaut dépressurisé sauf dans les phases ponctuelles de manœuvre des atterrisseurs.

Dans la position de dépressurisation, la vanne de dépressurisation 102 qui permet à tout fluide contenu dans le vérin de manœuvre 3 de pouvoir s'écouler si besoin vers la bâche de l'aéronef, et notamment le fluide contenu dans la chambre de rétraction 3B, sans opposer de résistance notable, lors de la descente de l'atterrisseur vers la position déployée, et ce quelle que soit la position du distributeur 4.

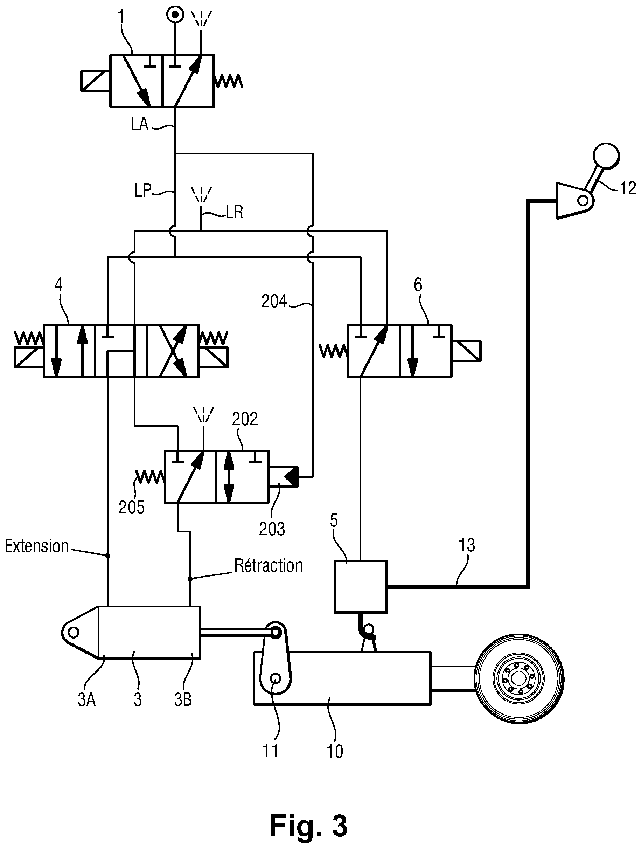

Selon un deuxième mode particulier de réalisation de l'invention détaillé en référence à la figure 3, la vanne de dépressurisation 202 est maintenant disposée sur une ligne du circuit allant du distributeur 6 à la chambre de rétraction 3B du vérin de manœuvre 3. Comme dans le mode de réalisation précédent, la position stable de la vanne de dépressurisation 202 est maintenant la position de dépressurisation. La position passante est ici commandée au moyen d'une commande hydraulique 203 qui n'est capable de surmonter l'effort du ressort de rappel 205 que si de la pression d'alimentation a été admise dans la ligne d'alimentation LA, c'est-à-dire si la vanne générale 1 a été commandée en position d'alimentation ET si de la pression d'alimentation a été fournie au circuit par les pompes de l'aéronef ou un accumulateur. A cet effet, une dérivation 204 part d'une branche de la ligne d'alimentation LA pour alimenter la commande hydraulique 203. On remarquera que la vanne de dépressurisation 202 n'est plus commandée mécaniquement par le levier 12. Le fonctionnement de la vanne de dépressurisation 102 est entièrement automatique, le circuit hydraulique étant par défaut dépressurisé sauf dans les phases ponctuelles de manœuvre des atterrisseurs.

Dans la position de dépressurisation, la vanne de dépressurisation 202 qui permet à tout fluide contenu dans la chambre de rétraction 3B de pouvoir s'écouler si besoin vers la bâche de l'aéronef sans opposer de résistance notable, lors de la descente de l'atterrisseur vers la position déployée, et ce quelle que soit la position du distributeur 4.

L'invention n'est pas limitée à ce qui vient d'être décrit, mais englobe au contraire toute variante entrant dans le cadre défini par les revendications. En particulier, si la soute dans lequel l'atterrisseur se rétracte est équipée d'une ou plusieurs trappes, le circuit hydraulique comprendra également un distributeur pour alimenter un vérin de manœuvre des trappes, et un distributeur pour libérer un crochet maintenant les trappes en position fermée. Les lignes de pression LP et de retour LR aboutissent alors auxdits distributeurs comme elles aboutissent aux distributeurs 4 et 6. Tous ces équipements sont bien entendus répliqués pour chacun des atterrisseurs du train d'atterrissage, bien qu'ils ne soient pas représentés ici.

## Revendications

1. Circuit hydraulique de manœuvre de train d'atterrissage d'aéronef comportant :
- une vanne générale (1) pour admettre une pression d'alimentation dans le circuit;
- des distributeurs (4,6) pour alimenter des actionneurs de manœuvre (3) d'atterrisseurs et/ou de trappes du train d'atterrissage ou des actionneurs de libération de crochets (5) maintenant les atterrisseurs et/ou les trappes en position rétractée ;
- une vanne de dépressurisation (102;202) pour, dans une position passante, permettre la distribution sélective de pression d'alimentation vers une chambre d'extension (3A) ou une chambre de rétraction (3B) de chaque vérin de manœuvre par les distributeurs, et, dans une position de dépressurisation, forcer la mise au retour d'une chambre de rétraction de chaque vérin de manœuvre ;
**caractérisé en ce que** la vanne de dépressurisation est rappelée (105;205) de façon stable vers la position de dépressurisation, et est déplacée dans la position passante uniquement en réponse à la présence de pression d'alimentation en aval de la vanne générale.

2. Circuit hydraulique selon la revendication 1, dans lequel une dérivation (104;204) part d'une ligne d'alimentation (LA) s'étendant entre la vanne générale (1) et les distributeurs (4,6) pour alimenter une commande en pression (103;203) de la vanne de dépressurisation plaçant celle-ci dans la position passante à l'encontre d'un ressort de rappel (105;205) vers la position de dépressurisation.

3. Circuit hydraulique selon la revendication 1, dans lequel la vanne de dépressurisation (102) est placée entre la vanne générale (1) et les distributeurs (4,6) .

4. Circuit hydraulique selon la revendication 1, dans lequel la vanne de dépressurisation (102) est placée sur une ligne hydraulique s'étendant entre les distributeurs (6) et les chambres de rétraction des vérins de manœuvre.

## Patentansprüche

1. Hydraulikkreis zum Betätigen eines Luftfahrzeug-Fahrwerks, umfassend:
- ein Hauptventil (1) zum Einlassen eines Versorgungsdrucks in den Kreis;
- Verteiler (4, 6) zum Versorgen von Aktoren (3) zum Betätigen von Fahrwerken und/oder von Klappen des Fahrwerks oder Aktoren (5) zum Lösen von Haken, die die Fahrwerke und/oder die Klappen in eingefahrener Position halten;
- ein Druckentlastungsventil (102; 202), um in einer Durchlassposition die selektive Verteilung von Versorgungsdruck an eine Extensionskammer (3A) oder eine Retraktionskammer (3B) jedes Betätigungszylinders durch die Verteiler zu gestatten und in einer Druckentlastungposition das Umschalten einer Retraktionskammer jedes Betätigungszylinders auf Rücklauf zu gestatten;
**dadurch gekennzeichnet, dass** das Druckentlastungsventil (105; 205) auf stabile Weise in die Druckentlastungsposition rückgestellt ist und nur in Antwort auf das Vorhandensein eines Versorgungsdrucks stromabwärts des Hauptventils in die Durchlassposition bewegt wird.

2. Hydraulikkreis nach Anspruch 1, bei dem eine Ableitung (104; 204) von einer sich zwischen dem Hauptventil (1) und den Verteilern (4, 6) erstreckenden Versorgungsleitung (LA) abgeht, um einen Druckbefehl (103; 203) für das Druckentlastungsventil zu liefern, der dieses entgegen einer Rückstellfeder (105; 205) zum Rückstellen in Richtung der Druckentlastungsposition in der Durchlassposition platziert.

3. Hydraulikreis nach Anspruch 1, bei dem das Druckentlastungsventil (102) zwischen dem Hauptventil (1) und den Verteilern (4, 6) angeordnet ist.

4. Hydraulikkreis nach Anspruch 1, bei dem das Druckentlastungsventil (102) auf einer Hydraulikleitung angeordnet ist, die sich zwischen den Verteilern (6) und den Retraktionskammern der Betätigungszylinder erstreckt.

## Claims

1. A hydraulic circuit for operating an aircraft landing gear comprising:
- a general valve (1) for admitting a supply pressure into the circuit;
- distributors (4, 6) for supplying undercarriages and/or landing gear doors operating actuators (3) or release actuators for hooks (5) maintaining the undercarriages and/or the doors in the retracted position;
- a depressurization valve (102; 202) for, in an open position, allowing the selective distribution of supply pressure to an extension chamber (3A) or a retraction chamber (3B) of each actuator by the distributors, and, in a depressurization position, forcing the return of a retraction chamber of each operating cylinder;
**characterized in that** the depressurization valve is returned (105; 205) in a stable manner to the depressurization position, and is moved into the open position only in response to the presence of supply pressure downstream of the general valve.

2. The hydraulic circuit according to claim 1, wherein a bypass (104; 204) extends from a supply line (LA) extending between the general valve (1) and the valves (4, 6) to supply a pressure control (103; 203) of the depressurization valve placing it in the open position against a return spring (105; 205) to the depressurization position.

3. The hydraulic circuit according to claim 1, wherein the depressurization valve (102) is located between the general valve (1) and the distributors (4,6).

4. The hydraulic circuit according to claim 1, wherein the depressurization valve (102) is placed on a hydraulic line extending between the distributors (6) and the retraction chambers of the actuating cylinders.
